(19) Europäisches Patentamt
European Patent Office
Office européen des brevets

(11) EP 3 601 405 B1

(12) **EUROPÄISCHE PATENTSCHRIFT**

(45) Veröffentlichungstag und Bekanntmachung des Hinweises auf die Patenterteilung:
**28.08.2024 Patentblatt 2024/35**

(21) Anmeldenummer: **18713930.8**

(22) Anmeldetag: **28.03.2018**

(51) Internationale Patentklassifikation (IPC):
***C08G 18/79** (2006.01)* ***C08G 18/02** (2006.01)*
***C08G 18/22** (2006.01)* ***C09D 179/04** (2006.01)*

(52) Gemeinsame Patentklassifikation (CPC):
**C08G 18/792; C08G 18/022; C08G 18/225; C09D 179/04**

(86) Internationale Anmeldenummer:
**PCT/EP2018/057917**

(87) Internationale Veröffentlichungsnummer:
**WO 2018/178149 (04.10.2018 Gazette 2018/40)**

(54) **AUFBAU VON BESCHICHTUNGEN DURCH GETRENNTES AUFTRAGEN VON POLYISOCYANATZUSAMMENSETZUNGEN UND VERNETZUNGSKATALYSATOREN**

GENERATION OF POLYISOCYANURATE LAYERS THROUGH SEPARATE APPLICATION OF ISOCYANATE COMPONENTS AND CATALYSTS

FABRICATION DE COUCHES DE POLYISOCYANURATE PAR APPLICATION SÉPARÉE DE COMPOSANTS D'ISOCYANATE ET CATALYSEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2017 EP 17163485**

(43) Veröffentlichungstag der Anmeldung:
**05.02.2020 Patentblatt 2020/06**

(73) Patentinhaber: **Covestro Deutschland AG**
**51373 Leverkusen (DE)**

(72) Erfinder:
- **TILLACK, Jörg**
  **42699 Solingen (DE)**
- **ACHTEN, Dirk**
  **51375 Leverkusen (DE)**
- **STECK, Cornelia**
  **46147 Oberhausen (DE)**
- **WAGNER, Roland**
  **51375 Leverkusen (DE)**

(74) Vertreter: **Levpat**
**c/o Covestro AG**
**Gebäude 4825**
**51365 Leverkusen (DE)**

(56) Entgegenhaltungen:
**EP-A2- 0 085 309** **WO-A1-2016/170058**
**US-A- 6 133 397**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 601 405 B1

## Beschreibung

Die vorliegende Erfindung betrifft ein Verfahren zur Beschichtung von Oberflächen durch das abwechselnde Auftragen von Polyisocyanatzusammensetzungen und geeigneten Vernetzungskatalysoren gefolgt von der katalytischen Vernetzung der Polyisocyanatzusammensetzung. Die Vernetzung erfolgt vorzugsweise ohne Beteiligung von Polyolen, Polyaminen oder Polythiolen.

US 6,133,397 beschreibt die katalytische Vernetzung von Polyisocyanaten zum Aufbau von Beschichtungen. Allerdings werden Katalysator und Polyisocyanat hier vor dem Auftragen auf die zu beschichtende Oberfläche gemischt.

Überraschend wurde in der der vorliegenden Patentanmeldung zugrunde liegenden Studie gefunden, dass stabile Beschichtungen mit günstigen anwendungstechnischen Eigenschaften auch dann erhalten werden können, wenn der Vernetzungskatalysator und das zu vernetzende Polyisocyanat in getrennten Schichten auf die zu beschichtende Oberfläche aufgetragen werden. Dieser Befund eröffnet vielfältige neue Möglichkeiten zum Aufbau von Beschichtungen.

In einer ersten Ausführungsform betrifft die vorliegende Erfindung ein Verfahren zur Beschichtung von Oberflächen enthaltend die Schritte

a) Auftragen einer Polyisocyanatzusammensetzung A auf eine Oberfläche;
b) Auftragen einer Zusammensetzung B enthaltend wenigstens einen Vernetzungskatalysator B1 auf dieselbe Oberfläche; und
c) Aushärten der Polyisocyanatzusammensetzung A durch katalytische Vernetzung der Polyisocyanatzusammensetzung A, wobei das molare Verhältnis der Summe von

freien und reversibel blockierten Isocyanatgruppen zur Summe der mit Isocyanatgruppen reaktiven Gruppen zu Beginn des Verfahrensschritts wenigstens 3 : 1 beträgt;
mit der Maßgabe, dass die Verfahrensschritte a) und b) in beliebiger Reihenfolge oder auch gleichzeitig, aber vor dem Verfahrensschritt c) so durchgeführt werden dass eine Vermischung der Polyisocyanatzusammensetzung A und des wenigstens einen Katalysators B erst auf der Oberfläche erfolgt;
und mit der Maßgabe, dass der Verfahrensschritt a) oder der Verfahrensschritt b) wenigstens zweimal ausgeführt wird.

## Reihenfolge der Verfahrensschritte

Grundsätzlich spielt es keine Rolle, ob zunächst die Polyisocyanatzusammensetzung A und dann die Zusammensetzung B aufgetragen wird oder ob die umgekehrte Reihenfolge gewählt wird. Es ist ebenfalls möglich, die Verfahrensschritte a) und b) gleichzeitig durchzuführen. Alle vorgenannten Abfolgen der Verfahrensschritte a) und b) haben gemein, dass eine Mischung der Polyisocyanatzusammensetzung A und der Zusammensetzung B erst nach Verlassen der zum Auftrag auf die Oberfläche verwendeten Vorrichtung, bevorzugt erst auf der Oberfläche, erfolgt. Die Zusammensetzungen A und B liegen also innerhalb der für den Auftrag verwendeten Vorrichtung unvermischt vor.

Es hat sich aber als vorteilhaft erwiesen und ist deswegen bevorzugt, dass im ersten Verfahrensschritt die Zusammensetzung B aufgetragen wird.

Jeder der Verfahrensschritte a) oder b) wird wenigstens zweimal wiederholt. Dabei kann der betreffende Verfahrensschritt ohne Zwischenschaltung des jeweils anderen Verfahrensschritts wiederholt werden. Es ergibt sich somit beispielsweise eine Abfolge a), a), b) und anschließend c) oder b), b), a) und anschließend c).

In einer bevorzugten Ausführungsform kann der Schritt c) durchgeführt werden, nachdem wenigstens eine Schicht a) und b) in beliebiger Reihenfolge aufgetragen wurden. Im Anschluss kann der Schichtaufbau mit a) und b) in beliebiger Reihenfolge weitergeführt werden wobei immer ein Schritt c) den Aufbau abschließt. Es ergibt sich also zum Beispiel die Abfolge a), b), c), a), b), c) oder a), b),c), b), a), c) oder b), a), c), a), b), c) oder b), a), c), b), a), c).

In einer bevorzugten Ausführungsform wird der Verfahrensschritt a) wenigstens zweimal durchgeführt, wobei die Wiederholung des Verfahrensschrittes a) erst stattfindet, wenn der Verfahrensschritt b) durchgeführt wurde. Es ergibt sich somit die Abfolge a), b), a) und als letzter Schritt c). Weiterhin bevorzugt ist eine Abfolge, a), b), a), b) und anschließend c).

In einer weiteren bevorzugten Ausführungsform wird der Verfahrensschritt b) wenigstens zweimal durchgeführt, wobei die Wiederholung des Verfahrensschrittes b) erst stattfindet, wenn der Verfahrensschritt a) durchgeführt wurde. Es ergibt sich somit die Abfolge b), a), b) und als letzter Schritt c). Weiterhin bevorzugt ist eine Abfolge b), a), b), a) und anschließend c).

Bevorzugt kann bei der Wiederholung eines Verfahrensschritts a) oder b) die gleiche Polyisocyanatzusammensetzung A bzw. die gleiche Katalysatorzusammensetzung B eingesetzt werden. Auf diese Weise sind z.B. bei Druckverfahren ohne Veränderungen an der Druckmaschine dicke Beschichtungen erhältlich.

In einer weiteren bevorzugten Ausführungsform wird die Polyisocyanatzusammensetzung A Schicht für Schicht

variiert und die Katalysatorzusammensetzung B konstant gehalten, wodurch schichtabhängige Eigenschaften erhalten werden können, so dass die erhaltene Beschichtung über ihre Dicke unterschiedlich aufgebaut ist.

In einer weiteren bevorzugten Ausführungsform wird die Katalysatorzusammensetzung B Schicht für Schicht variiert und die Polyisocyanatzusammensetzung A konstant gehalten, wodurch schichtabhängige Vernetzungsgeschwindigkeiten im Schritt c) erhalten werden können.

In einer anderen bevorzugten Ausführungsform wird sowohl die Katalysatorzusammensetzung B Schicht für Schicht variiert als auch die Polyisocyanatzusammensetzung A variiert, wodurch schichtabhängig angepasste Eigenschaften und Vernetzungsgeschwindigkeiten in Schritt c) erhalten werden können.

## Schichtdicke

Die absolute Dicke der durch die Polyisocyanatzusammensetzung A gebildeten Schicht und das Verhältnis ihrer Dicke zur Dicke der durch die Zusammensetzung B gebildeten Schicht ist vorzugsweise so gewählt, dass in Verfahrensschritt c) eine Aushärtung der Polyisocyanatzusammensetzung A durch katalytische Vernetzung, wie im Abschnitt "Härtung" definiert, erfolgen kann. Die Ausbildung der funktionellen Gruppen, die eine Vernetzung der Isocyanatgruppen der in der Polyisocyanatzusammensetzung A enthaltenen Polyisocyanate bewirken, kann durch gängige analytische Verfahren, bevorzugt durch IR-Spektroskopie, wie im Ausführungsbeispiel beschrieben, bestimmt werden. Alternativ ist auch die Rheologie besonders gut für die Analyse geeignet.

Das maximale Auftragsgewicht der festen Bestandteile der Zusammensetzungen A und B ohne Berücksichtigung von Lösungsmitteln oder wässrigen Bestandteilen einer durch die Zusammensetzung A gebildeten Schicht ist vorzugsweise $\leq$ 250 g/m$^2$, stärker bevorzugt $\leq$ 150 g/m$^2$, noch stärker bevorzugt $\leq$ 100 g/m$^2$ und ganz besonders bevorzugt $\leq$ 90 g/m$^2$ pro Schichtauftrag.

Die Katalysatorkonzentration bei den obengenannten Auftragsgewichten beträgt vorzugsweise 0,05 Gew.-% bis 10 Gew.-%, bevorzugt 0,5 Gew.-% bis 5 Gew.-% und am stärksten bevorzugt 1 bis 4 Gew.-%. Hierbei ist der Anteil des Katalysators auf die in der Polyisocyanatzusammensetzung A enthaltenen Mono- und Polyisocyanate bezogen.

Hierbei beträgt das maximale Auftragsgewicht wie oben definiert einer durch die Zusammensetzung B gebildeten Schicht vorzugsweise $\leq$ 50 g/m$^2$, stärker bevorzugt $\leq$ 30 g/m$^2$ , noch stärker bevorzugt $\leq$ 10 g/m$^2$ und ganz besonders bevorzugt $\leq$ 5 g/m$^2$ pro Schichtauftrag.

Erfindungsgemäß ist es erforderlich, dass wenigstens auf einem Teil der zu beschichtenden Oberfläche die Polyisocyanatzusammensetzung A mit der Zusammensetzung B so in Kontakt kommt, dass in Verfahrensschritt c) eine katalytische Vernetzung der in der Polyisocyanatzusammensetzung A enthaltenen Polyisocyanate erfolgen kann. Es ist aber nicht ausgeschlossen, dass Teile der Oberfläche nur von einer der beiden Zusammensetzungen oder von keiner der beiden Zusammensetzung bedeckt sind.

## Methoden des Auftragens

Das Auftragen der Zusammensetzungen A und B kann nach unterschiedlichen an sich bekannten Methoden erfolgen. Dies sind vorzugsweise Spritzen, Streichen, Tauchen, Gießen, Fluten oder Auftragen mit Hilfe von Pinseln, Walzen, Düsen oder Rakeln. Besonders bevorzugt sind Drucktechnologien, insbesondere Siebdruck, Valvejet, Bubblejet und Piezodruck. Die zu beschichtende Oberfläche muss durch die Komponenten A und/oder B ausreichend benetzt werden. Vorzugsweise ist die ausrechende Benetzbarkeit einer Oberfläche mit A und/oder B dadurch definiert, dass der Kontaktwinkel der Flüssigkeit auf der Oberfläche maximal 100° beträgt, wobei die Kontaktwinkelmessung vorzugsweise mittels eines Tensiometers nach der Wilhelmy-Methode durchgeführt wird.

In einer bevorzugten Ausführungsform werden sowohl der Katalysator als auch das Isocyanat in Formulierungen eingesetzt, die eine ausreichende Benetzung gewährleisten. Dazu setzt der Fachmann im Lack, Klebstoff und Druck bekannte Additive und Formulierhilfsmittel ein, wie sie in Standardwerken zur Lack, Klebstoff und Druckfarben Entwicklung und Applikation beschrieben sind. Außerdem findet man Informationen zu geeigneten Additiven in den Unterlagen von darauf spezialisierten Firmen wie zum Beispiel im BYK Additive Guide der Firma BYK-Chemie GmbH.

Vorzugsweise besteht die zu beschichtende Oberfläche aus einem Material ausgewählt aus der Gruppe bestehend aus mineralischen Stoffen, Metall, harten Kunststoffen, flexiblen Kunststoffen, Textilien, Leder, Holz, Holzderivaten und Papier. Mineralische Stoffe sind vorzugsweise ausgewählt aus der Gruppe bestehend aus Glas, Stein, keramischen Materialien und Beton. In einer besonders bevorzugten Ausführungsform liegen diese Materialien schon als mit üblichen organischen oder anorganischen oder hybriden Lacken, Primern, Wachsen modifizierte Oberflächen vor.

In einer bevorzugten Ausführungsform der vorliegenden Erfindung werden die Zusammensetzung A und B nur auf Teile der zu beschichtenden Oberfläche aufgetragen. Auf diese Weise lassen sich z.B. Muster erzeugen.

Besonders bevorzugt wird zunächst die Zusammensetzung B auf die gesamte Oberfläche oder Teile davon aufgetragen. Anschließend wird die Polyisocyanatzusammensetzung A nur auf einen Teil der mit der Zusammensetzung B bedeckten Oberfläche aufgetragen. Nach der in Verfahrensschritt c) stattfindenden katalytischen Vernetzung der

Polyisocyanatzusammensetzung A kann die Zusammensetzung B an den Stellen, die nicht von der Polyisocyanatzusammensetzung A bedeckt waren, einfach abgewaschen werden, so dass man eine nur teilweise beschichtete Oberfläche erhält. Eine solche teilweise beschichtete Oberfläche kann auch erhalten werden, indem die Polyisocyanatzusammensetzung A auf die gesamte Oberfläche oder Teile davon aufgetragen wird und anschließend die Zusammensetzung B nur auf jene Teile der Oberfläche aufgetragen wird, die auch beschichtet werden sollen. Nach der katalytischen Vernetzung in Verfahrensschritt c) kann dann die nicht vernetzte Polyisocyanatzusammensetzung A von den Stellen der Oberfläche entfernt werden, an denen keine Zusammensetzung B vorhanden war.

Kennzahl

Das molare Verhältnis der Summe von freien und reversibel blockierten Isocyanatgruppen zur Summe der mit Isocyanatgruppen reaktiven Gruppen im Reaktionsgemisch, das zu Beginn des Verfahrensschritts c) auf der Oberfläche vorliegt, beträgt wenigstens 3 zu 1 bevorzugt wenigstens 5 zu 1 und noch stärker bevorzugt wenigstens 10 : 1. Das "Reaktionsgemisch" enthält die Polyisocyanatzusammensetzung A, die Zusammensetzung B und alle weiteren Komponenten, die vor Beginn des Verfahrensschritts c) auf die Oberfläche aufgetragen werden. "Reversibel blockierte" Isocyanatgruppen sind weiter unten in dieser Anmeldung im Abschnitt "Blockierte Isocyanate" definiert. Unter mit Isocyanatgruppen reaktiven Gruppen werden Hydroxyl-, Thiol- und Aminogruppen verstanden.

**Polyisocyanatzusammensetzung A**

Die Polyisocyanatzusammensetzung A ist eine Zusammensetzung, welche wenigstens ein Polyisocyanat enthält. In einer Ausführungsform der vorliegenden Erfindung enthält die Polyisocyanatzusammensetzung A zusätzlich zu dem wenigstens einen Polyisocyanat wenigstens eine Komponente ausgewählt aus der Gruppe bestehend aus Monoisocyanaten, Lösemitteln, Reaktivverdünnern, Füllstoffen und Additiven.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht. Die Isocyanatgruppen eines Polyisocyanats können frei oder durch weiter unten in dieser Anmeldung beschriebene Blockierungsmittel blockiert vorliegen.

Aus Polyisocyanaten lässt sich wegen der Mehrfachfunktionalität ($\geq$ 2 Isocyanat-Gruppen) eine Vielzahl von Polymeren (z. B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur) herstellen.

Wenn hier allgemein von "Polyisocyanaten" die Rede ist, so sind damit monomere und/oder oligomere Polyisocyanate gleichermaßen gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Das wenigstens eine in der Polyisocyanatzusammensetzung A enthaltene Polyisocyanat kann ein monomeres oder ein oligomeres Polyisocyanat sein. Es ist ebenfalls möglich, dass die Polyisocyanatzusammensetzung A wenigstens ein monomeres und wenigstens ein oligomeres Polyisocyanat enthält.

Vorzugsweise weist wenigstens eines der in der Polyisocyanatzusammensetzung A enthaltenen monomeren oder oligomeren Polyisocyanate eine (mittlere) NCO-Funktionalität von 2,0 bis 6,0, vorzugsweise von 2,3 bis 4,5 auf.

Besonders praxisgerechte Ergebnisse stellen sich ein, wenn die erfindungsgemäß einzusetzende Polyisocyanatzusammensetzung A einen Gehalt an Isocyanatgruppen von 3,0 bis 55,0 Gew.-% aufweist. Als ganz besonders praxisgerecht hat es sich erwiesen, wenn die erfindungsgemäße Polyisocyanatzusammensetzung A einen Gehalt an Isocyanatgruppen von 10,0 bis 30,0 Gew.-%, jeweils bezogen auf das Gewicht aller in der Polyisocyanatzusammensetzung A enthaltenen Isocyanate, aufweist.

**Geeignete monomere Polyisocyanate**

Als in der Polyisocyanatzusammensetzung A einzusetzende monomere Polyisocyanate sind solche monomeren Polyisocyanate mit einem Molekulargewicht im Bereich von 140 bis 400 g/mol geeignet, die aliphatisch, cycloaliphatisch, araliphatisch und/oder aromatisch gebundenen Isocyanatgruppen enthalten. Diese Polyisocyanate sind auf verschiedene Weise, beispielsweise durch Phosgenierung in der Flüssig- oder Gasphase oder auf phosgenfreien Weg, wie z.B. durch thermische Urethanspaltung erhältlich.

Bevorzugte monomere Isocyanate mit aliphatisch gebundenen Isocyanatgruppen sind 1,4-Diisocyanatobutan

(BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan.

Bevorzugte monomere Isocyanate mit cycloaliphatisch gebundenen Isocyanatgruppen sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Bevorzugte monomere Isocyanate mit araliphatisch gebundenen Isocyanatgruppen sind 1,3- und 1,4-Bis-(isocyanatomethyl)benzol (Xyxlylendiisocyanat; XDI), 1,3- und 1,4-Bis(1-isocyanato-1-methyl¬ethyl)-benzol (TMXDI).

Bevorzugte monomere Isocyanate mit aromatisch gebundenen Isocyanatgruppen sind 2,4- und 2,6-Diisocyanatotoluol (TDI), 2,4'- und 4,4'-Diisocyanatodiphenylmethan (MDI) und 1,5-Diisocyanatonaphthalin.

Weitere ebenfalls geeignete Diisocyanate finden sich darüber hinaus beispielsweise in Justus Liebigs Annalen der Chemie Band 562 (1949) S. 75 - 136.

In einer bevorzugten Ausführungsform enthält die Polyisocyanatzusammensetzung A mindestens 40 Gew. % bevorzugt 50% Gew. %, besonders bevorzugt 60 Gew. % und ganz besonders bevorzugt 70 Gew. % von Verbindungen die mindestens eine Isocyanatgruppe enthalten mit der Maßgabe, dass die durchschnittliche Funktionalität der in der Polyisocyanatzusammensetzung A enthaltenen Isocyanate wenigstens 1,5, stärker bevorzugt wenigstens 1,7 und noch stärker bevorzugt wenigstens 2,0 beträgt.

**Herstellung oligomerer Polyisocyanate**

Erfindungsgemäß einsetzbare oligomere Polyisocyanate sind aus den oben beschriebenen monomeren Polyisocyanaten durch den im folgenden Abschnitt beschriebenen Vorgang der "Modifizierung" monomerer Polyisocyanate erhältlich. Hierbei können oligomere Polyisocyanate durch Modifizierung einzelner der oben genannten monomeren Polyisocyanate erhalten werden. Es ist aber auch möglich, Gemische von wenigstens zwei der oben genannten monomeren Polyisocyanate zu modifizieren, so dass oligomere Polyisocyanate erhalten werden, die aus wenigstens zwei unterschiedlichen Monomeren aufgebaut sind.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

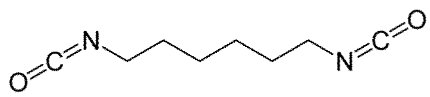

HDI

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

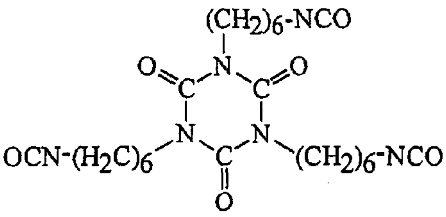

HDI- Isocyanurat

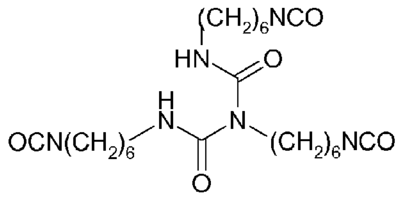

HDI-Biuret

(idealisierte Strukturformeln)

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer

Ausführungsform der Erfindung weisen die oligomeren Polyisocyanate mindestens eine der folgenden oligomeren Strukturtypen oder deren Gemische auf:

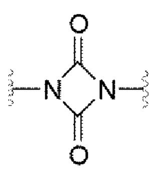

Uretdion

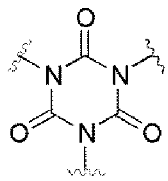

Isocyanurat

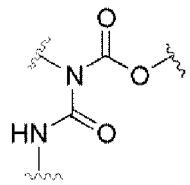

Allophanat

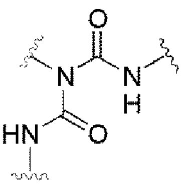

Biuret

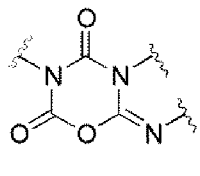

Iminooxadiazindion

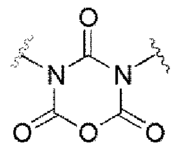

Oxadiazintrion

Überraschend hat sich herausgestellt, dass es vorteilhaft sein kann, oligomere Polyisocyanate einzusetzen, die eine Mischung aus mindestens zwei oligomeren Polyisocyanaten darstellen, wobei sich die mindestens zwei oligomere Polyisocyanate in ihrer Struktur unterscheiden. Diese ist vorzugsweise ausgewählt aus der Gruppe bestehend aus Uretdion-, Isocyanurat-, Allophanat-, Biuret-, Iminooxadiazindion- und Oxadiazintrionstruktur und deren Mischungen. Derartige Ausgangsmischungen können insbesondere im Vergleich zu Vernetzungsreaktionen mit oligomeren Polyisocyanaten nur einer definierten Struktur zu einer Beeinflussung des Tg-Wertes führen, was für viele Anwendungen vorteilhaft ist.

Bevorzugt wird im erfindungsgemäßen Verfahren eine Polyisocyanatzusammensetzung A) eingesetzt, die mindestens ein oligomeres Polyisocyanat mit Biuret-, Allophanat-, Isocyanurat-, und/oder Iminooxadiazindionstruktur und Mischungen davon enthält.

Gemäß einer anderen Ausführungsform handelt es sich bei einem in der Polyisocyanatzusammensetzung A enthaltenen oligomeren Polyisocyanat um eine solches, das nur eine einzelne definierte oligomere Struktur, beispielsweise ausschließlich oder größtenteils Isocyanuratstruktur, enthält. In der Regel liegen in den erfindungsgemäß verwendeten oligomeren Polyisocyanaten herstellungsbedingt aber immer mehrere unterschiedliche oligomere Strukturen nebeneinander vor.

Im Rahmen der vorliegenden Erfindung wird oligomeres Polyisocyanat als aus einer einzelnen definierten oligomeren Struktur aufgebaut angesehen, wenn eine oligomere Struktur ausgewählt aus Uretdion-, Isocyanurat-, Allophanat-, Biuret-, Iminooxadiazindion- und/oder Oxadiazintrionstruktur zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur in dem oligomeren Polyisocyanat, vorliegt.

Im erfindungsgemäßen Verfahren wird gemäß einer weiteren Ausführungsform ein oligomeres Polyisocyanat einer einzelnen definierten oligomeren Struktur eingesetzt, wobei die oligomere Struktur aus Uretdion-, Isocyanurat-, Allophanat-, Biuret-, Iminooxadiazindion- und/oder Oxadiazintrionstruktur ausgewählt ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im oligomeren Polyisocyanat, vorliegt.

Gemäß einer weiteren Ausführungsform handelt es sich bei den oligomeren Polyisocyanaten um solche, die hauptsächlich Isocyanuratstruktur aufweisen, und die oben genannten Uretdion-, Allophanat-, Biuret-, Iminooxadiazindion- und/oder Oxadiazintrionstruktur lediglich als Nebenprodukte enthalten dürfen. So sieht eine Ausführungsform der Erfindung den Einsatz eines oligomeren Polyisocyanats einer einzelnen definierten oligomeren Struktur vor, wobei die

oligomere Struktur eine Isocyanuratstruktur ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im Polyisocyanat, vorliegt.

Es ist erfindungsgemäß ebenfalls möglich oligomere Polyisocyanate einzusetzen, die weitestgehend keine Isocyanuratstruktur aufweisen, und hauptsächlich mindestens einen der oben genannten Uretdion-, Allophanat-, Biuret-, Iminooxadiazindion- und/oder Oxadiazintrion-Strukturtypen enthalten. Gemäß einer besonderen Ausführungsform der Erfindung besteht das eingesetzte oligomere Polyisocyanat mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, aus oligomeren Polyisocyanaten, die einen Strukturtyp ausgewählt aus der Gruppe bestehend aus Uretdion-, Allophanat-, Biuret-, Iminooxadiazindion- und/oder Oxadiazintrionstruktur aufweisen.

Eine weitere Ausführungsform der Erfindung sieht den Einsatz eines isocyanuratarmen Polyisocyanats vor, welches, bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, höchstens als 50 mol-%, vorzugsweise höchstens als 40 mol-%, bevorzugt höchstens als 30 mol-%, besonders bevorzugt höchstens als 20 mol-%, 10 mol-% oder 5 mol-% Isocyanuratstrukturen aufweist.

Eine weitere Ausführungsform der Erfindung sieht den Einsatz eines oligomeren Polyisocyanats eines einzelnen definierten oligomeren Strukturtyps vor, wobei der oligomere Strukturtyp ausgewählt ist aus der Gruppe bestehend aus Uretdion-, Allophanat-, Biuret-, Iminooxadiazindion- und/oder Oxadiazintrionstruktur und dieser Strukturtyp zu mindestens 50 mol-%, vorzugsweise 60 mol-%, bevorzugt 70 mol-%, besonders bevorzugt 80 mol-%, insbesondere 90 mol-% , bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, vorliegt.

Die Anteile an Uretdion-, Isocyanurat-, Allophanat-, Biuret-, Iminooxadiazindion- und/oder Oxadiazintrionstruktur in der Polyisocyanatzusammensetzung A) können z.B. durch NMR-Spektroskopie bestimmt werden. Bevorzugt lässt sich hierbei die 13C-NMR-Spektroskopie, vorzugsweise protonenentkoppelt, einsetzen, da die genannten oligomeren Strukturen charakteristische Signale liefern.

Herstellverfahren für die in der Polyisocyanatzusammensetzung A) erfindungsgemäß einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Gemäß einer zusätzlichen oder alternativen Ausführungsform der Erfindung ist ein erfindungsgemäß einsetzbares oligomeres Polyisocyanat dadurch definiert, dass es oligomere Polyisocyanate enthält, die aus monomeren Diisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurde. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Isocyanurat-, Allophanat-, Biuret-, Iminooxadiazindion- und/oder Oxadiazintrionstrukturen verbraucht wird.

**Einstellung der Viskosität der Polyisocyanatzusammensetzung A**

Für unterschiedliche Verfahren des Auftragens der Polyisocyanatzusammensetzung A auf Oberflächen sind jeweils definierte Viskositäten der Polyisocyanatzusammensetzung A besonders geeignet. Da nicht jedes monomere oder oligomere Polyisocyanat als Reinstoff bei der gewünschten Verarbeitungstemperatur die geeignete Viskosität hat, muss die Viskosität der Polyisocyanatzusammensetzung A für manche Anwendungen angepasst werden. Insbesondere oligomere Polyisocyanate haben bei Raumtemperatur Viskositäten, die für manche Anwendungen zu hoch sind.

In einer bevorzugten Ausführungsform der vorliegenden Erfindung wird eine Polyisocyanatzusammensetzung A durch Zugabe eines geeigneten Lösungsmittels verdünnt, um ihre Viskosität abzusenken. Geeignete Lösemittel sind alle solche Lösungsmittel, die nicht oder nur langsam mit Isocyanaten reagieren und diese bevorzugt vollständig lösen sowie einen Siedepunkt > 30°C und < 300°C aufweisen. Beispielhaft seien Lösungsmittel beinhaltend Strukturelemente ausgewählt aus Keton, Ester, Ether, alicyclische Ringe, heterocyclische Ringe, Aromaten, Chlor und beliebige Mischungen derselben genannt wie z.B. Ethylacetat, Butylacetat, Methoxypropylacetat, Aceton, Methylethylketon, Methylisobutylketon, Cyclohexanon, Toluol, Xylol, Solventnaphtha® 100 und deren Mischungen. Bevorzugte Lösungsmittel sind Methylethylketon, Ethylacetat, Butylacetat und 2-Ethylhexylacetat.

Mit den genannten Lösemitteln ist im Allgemeinen eine gute Verträglichkeit gegeben, jedoch müssen die entsprechenden Lösungen auf Lagerstabilität geprüft werden. Vorzugsweise haben die Lösemittel einen Wassergehalt von

max. 0,05 Gew.-%. Weiterhin enthalten sie vorzugsweise Verbindungen, die reaktive Gruppen wie Hydroxyl- oder Aminogruppen enthalten, in Anteilen von maximal 0,05 Gew.-%.

In einer weiteren bevorzugten Ausführungsform der vorliegenden Erfindung wird die Viskosität einer Polyisocyanatzusammensetzung A durch die Mischung von oligomeren und monomeren Polyisocyanaten eingestellt. Da oligomere Isocyanate eine höhere Viskosität aufweisen als die monomeren Polyisocyanate, aus denen sie aufgebaut sind, kann durch geeignete Mischung von beiden Komponenten die gewünschte Viskosität der Polyisocyanatzusammensetzung A eingestellt werden. So kann die Viskosität einer Zusammensetzung, die oligomere Polyisocyanate enthält oder daraus besteht, durch Zugabe geeigneter monomere Polyisocyanate abgesenkt werden. Umgekehrt können oligomere Polyisocyanate zu einer Zusammensetzung gegeben werden, die monomere Polyisocyanate enthält oder daraus besteht, um deren Viskosität zu erhöhen. Wenn die Viskosität einer Polyisocyanatzusammensetzung A durch Variation der Mengenanteile monomerer und oligomerer Polyisocyanate eingestellt wird, hat dies gegenüber der Verwendung von Lösungsmitteln den Vorteil, dass keine flüchtigen organischen Verbindungen in der Beschichtung zurückbleiben bzw. vor Verfahrensschritt c) verdampft werden müssen (Trocknung).

In einer weiteren bevorzugten Ausführungsform der vorliegenden Erfindung wird die Viskosität der Polyisocyanatzusammensetzung A durch Erhöhung oder Absenkung ihrer Temperatur auf den gewünschten Wert eingestellt. Dieses Verfahren kann auch mit der Einstellung der Viskosität durch Lösungsmittelzugabe oder durch Mischung monomerer und oligomerer Polyisocyanate kombiniert werden.

**Monomerarme Polyisocyanatzusammensetzungen A**

In einer bevorzugten Ausführungsform der vorliegenden Erfindung ist die Polyisocyanatzusammensetzung A monomerarm (d.h. arm an monomeren Diisocyanaten) und enthält bereits oligomere Polyisocyanate. Gemäß einer Ausführungsform der Erfindung besteht die Polyisocyanatzusammensetzung A vollständig oder zu mindestens 80, 85, 90, 95, 98, 99 oder 99,5 Gew.-%, jeweils bezogen auf das Gewicht der Polyisocyanatzusammensetzung A, aus oligomeren Polyisocyanaten. Dieser Gehalt an oligomeren Polyisocyanaten bezieht sich auf die Polyisocyanatzusammensetzung A, d.h. diese werden nicht etwa während des erfindungsgemäßen Verfahrens als Zwischenprodukt gebildet, sondern liegen bereits zu Beginn der Reaktion in der als Edukt eingesetzten Polyisocyanatzusammensetzung A vor.

"Monomerarm" und "arm an monomeren Diisocyanaten" wird hier in Bezug auf die Polyisocyanatzusammensetzung A synonym verwendet.

Besonders praxisgerechte Ergebnisse stellen sich ein, wenn die Polyisocyanatzusammensetzung A einen Anteil an monomeren Diisocyanaten in der Polyisocyanatzusammensetzung A von höchstens 20 Gew.-%, insbesondere höchstens 15 Gew.-% oder höchstens 10 Gew.-%, jeweils bezogen auf das Gewicht der Polyisocyanatzusammensetzung A, aufweist. Vorzugsweise weist die Polyisocyanatzusammensetzung A einen Gehalt an monomeren Diisocyanaten von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A, auf. Besonders gute Ergebnisse stellen sich ein, wenn die Polymerzusammensetzung A im Wesentlichen frei von monomeren Diisocyanaten ist. Im Wesentlichen frei bedeutet dabei, dass der Gehalt an monomeren Diisocyanaten höchstens 0,5 Gew.-%, bezogen auf das Gewicht der Polyisocyanatzusammensetzung A, beträgt.

Oligomerarme Polyisocyanatzusammensetzungen A lassen sich erhalten indem oligomere Polyisocyanate eingesetzt werden, bei deren Herstellung sich an die eigentliche Modifizierungsreaktion in jedem Fall mindestens ein weiterer Verfahrensschritt zur Abtrennung der nicht umgesetzten überschüssigen monomeren Diisocyanate anschließt. Diese Monomerenabtrennung kann besonders praxisgerecht nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer besonders bevorzugten Ausführungsform der Erfindung wird die erfindungsgemäße Polyisocyanatzusammensetzung A durch Modifizierung monomerer Diisocyanate mit anschließender Abtrennung nicht umgesetzter Monomere erhalten.

**Einsatz blockierter Polyisocyanate**

In einer bevorzugten Ausführungsform der vorliegenden Erfindung ist wenigstens ein Teil der in der Polyisocyanatzusammensetzung A enthaltenen Polyisocyanate blockiert. Erfindungsgemäß können sowohl monomere als auch oligomere Polyisocyanate blockiert vorliegen. "Blockierung" bedeutet, dass die Isocyanatgruppen eines Polyisocyanats mit einer weiteren Verbindung, dem Blockierungsmittel, umgesetzt wurden, so dass die blockierten Isocyanatgruppen nicht mehr die für freie Isocyanatgruppen typische Reaktivität zeigen. Erst eine Erwärmung des blockierten Isocyanats führt zu einer Abspaltung des Blockierungsmittels und stellt die Reaktivität der Isocyanatgruppen wieder her.

Vorzugsweise wird wenigstens eine Verbindung ausgewählt aus der Gruppe bestehend aus Lactamen, Oximen,

Aminen und Phenolen als Blockierungsmittel verwendet. Stärker bevorzugt erfolgt die Blockierung mit wenigstens einem Lactam und/oder Oxim. Bevorzugte Lactame sind ausgewählt aus der Gruppe bestehend aus δ-Valerolactam, Laurinlactam und ε-Caprolactam . Ein besonders bevorzugtes Lactam ist ε-Caprolactam. Bevorzugte Oxime sind ausgewählt aus der Gruppe bestehend aus 2-Butanonoxim, Formaldoxim, Acetophenonoxim, Diethlglyoxim, Pentanonoxim, Hexanonoxim, Cyclohexanonoxim und Hydroxamsäure. Ein besonders bevorzugtes Oxim ist 2-Butanonoxim. Bevorzugte Phenole sind ausgewählt aus der Gruppe bestehend aus Phenol, 2,3,5-Trimethylphenol, 2,3,6-Trimethylphenol, 2,4,6-Trimethylphenol, o-Kresol, m-Kresol, p-Kresol, 2-tert-Butylphenol und 4-tert-Butylphenol. Bevorzugte Amine sind ausgewählt aus der Gruppe bestehend aus Diisopropylamin, Tetramethylpiperidin und N-methyl-tert-butylamin, Tert-butylbenzylamin, n-Dibutylamin, 3-Tert-butylaminomethylpropionat.

Es ist ebenfalls bevorzugt möglich, eine Mischung von zwei, drei oder mehr der vorgenannten Verbindungen als Blockierungsmittel einzusetzen bzw. Polyisocyanate, die mit jeweils unterschiedlichen Blockierungsmitteln blockiert wurden, zu mischen.

In einer bevorzugten Ausführungsform der vorliegenden Erfindung ist der überwiegende Teil der in der Polyisocyanatzusammensetzung A vorliegenden Isocyanatgruppen blockiert. Besonders bevorzugt sind wenigstens 90 Gew.-%, noch stärker bevorzugt wenigstens 95 Gew.-% und am stärksten bevorzugt 98 Gew.-% der in der Polyisocyanatzusammensetzung A vorliegenden Isocyanatgruppen blockiert. Ganz besonders bevorzugt enthält die Polyisocyanatzusammensetzung A keine nachweisbaren freien Isocyanatgruppen. Freie Isocyanatgruppen können mittels IR-Spektroskopie bestimmt werden. Die NCO-Bande wird bei 2700 $cm^{-1}$ beobachtet.

## Einsatz von Isocyanat-terminierten Präpolymeren

Eine weitere Ausführungsform der Erfindung sieht den Einsatz eines isocyanat-terminierte Präpolymere als oligomeres Polyisocyanat vor. Diese Präpolymere sind dem Fachmann bekannt und können durch Umsetzung eines Überschusses eines geeigneten monomeren Isocyanats, wie zuvor beschrieben, mit einer geeigneten isocyanat-reaktive Gruppen tragenden Verbindung erhalten werden.

Als isocyanat-reaktive Gruppen werden im Rahmen der vorliegenden Erfindung Amin, Amid, Urethan, Alkohol, Thiol, Epoxid-, Carbonsäure-, Carbonsäueanhydrid-Gruppen oder Gruppen verstanden, die Zerewitinoff-aktiven Wasserstoff enthalten. Zur Definition von Zerewitinoff-aktivem Wasserstoff wird auf Römpp Chemie Lexikon, Georg Thieme Verlag Stuttgart verwiesen. Bevorzugt werden unter isocyanat-reaktiven Gruppen OH, NH und/oder SH verstanden.

Beispiele für Verbindung mit isocyanat-reaktiven Gruppen sind ein- zwei, und mehrwertige Alkohole mit primären, sekundären und tertiären OH-Gruppen, analoge Thiole, Polyole, z.B. Polyether-, Polyester-, Polyacrylat-, Polycarbonatpolyole, analoge Polythiole, schwefelhaltige Hydroxyverbindungen, Amine (z.B. primär, sekundär, aliphatisch, cycloaliphatisch, aromatisch, sterisch gehindert), Polyamine und Asparaginsäure Ester.

Alkohole können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), aber auch höhermolekulare Polyhydroxyverbindungen wie Polyetherpolyole, Polyesterpolyole, Polycarbonatpolyole, Polysiloxanpolyole, sowie Polybutadienpolyole sein.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Bernsteinsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Amine können beliebige ein- oder mehrwertige Amine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin, Dicyclohexylamin, Hydrazin, Ethylendiamin, 1,2-Diaminopropan, 1,4-Diaminobutan, 2-Methyl-pentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Pyrrolidin, Piperidin, Piperazin, (3-Aminopropyl)-trimethoxysilan, (3-Aminopropyl)-triethoxysilan und (3-Methylamino)propyl-trimethoxysilan, Aminoalkohole, wie z. B. 2-Aminoethanol, 2-Methylaminoethanol, 2-(Dimethylamino)-ethanol, 2-(Diethylamino)-ethanol, 2-(Dibutyl-amino)-ethanol, Diethanolamin, N-Methyl-diethanolamin, Triethanolamin, 3-Amino-1-propanol, 3-Dimethylamino-1-propanol, 1-Amino-2-propanol, 1-Dimethylamino-2-propanol, 1-Diethylamino-2-propanol, Bis-(2-hydroxypropyl)-amin, Bis-(2-hydroxypropyl)-methylamin, 2-(Hydroxyethyl)-bis-(2-hydroxypropyl)-amin, Tris-(2-hydroxypropyl)-amin, 4-Amino-2-butanol, 2-Amino-2-methylpropanol, 2-Amino-2-methyl-1,3-propandiol, 2-Amino-2-hydroxypropyl-1,3-propandiol und N-(2-Hydroxyethyl)-piperidin, Etheramine, wie z. B. 2-Methoxyethylamin, 3-Methoxypropylamin, 2-(2-Dimethylaminoethoxy)-ethanol und 1,4-Bis-(3-aminopropoxy)-butan oder aromatische Di- und Triamine mit wenigstens einem Alkylsubstituenten mit 1 bis 3 Kohlenstoffatomen am aromatischen Ring, wie z. B. 2,4-Toluylendiamin, 2,6-Toluylendiamin, 1-Methyl-3,5-diethyl-2,4-diaminobenzol, 1,3-Diethyl,2,4-diaminobenzol, 1-Methyl-3,5-diethyl-2,6-diaminobenzol, 1,3,5-Triethyl-2,6-diaminobenzol, 3,5,3',5'-tetraethyl-4,4'-diaminodiphenylmethan, 3,3'-Dimethyl-4,4'-diaminodiphenylmethan, 1-Ethyl-2,4-diaminobenzol, 1-Ethyl-2,6-diaminobenzol, 2,6-Diethylnaphthylen-1,5-diamin, 4,4'-Methylenebis-(2,6-Diisopropylaniline) sein.

Des Weiteren können auch Polyamine, wie z. B. die aus EP-B 0 403 921 bekannten Polyasparaginsäurederivate, oder auch solche Polyamine, deren Aminogruppen in blockierter Form vorliegen, wie z. B. Polyketimine, Polyaldimine oder Oxazolane, verwendet werden. Aus diesen blockierten Aminogruppen entstehen unter Feuchtigkeitseinfluss freie Aminogruppen und im Falle der Oxazolane auch freie Hydroxylgruppen, die unter Vernetzung mit Isocyanatgruppen abreagieren können.

Geeignete aminofunktionelle Komponenten sind insbesondere Polyasparaginsäureester, wie sie beispielsweise nach dem Verfahren der EP-B 0 403 921 durch Umsetzung von Diaminen mit Fumarsäure- bzw. Maleinsäureestern erhältlich sind.

Bevorzugte aminofunktionelle Verbindungen sind Polyetherpolyamine mit 2 bis 4, vorzugsweise 2 bis 3 und besonders bevorzugt 2 aliphatisch gebundenen primären Aminogruppen und einem zahlenmittleren Molekulargewicht Mn von 148 bis 12200, vorzugsweise 148 bis 8200, besonders bevorzugt 148 bis 4000 und ganz besonders bevorzugt 148 bis 2000 g/mol. Besonders geeignete Thiole sind Verbindungen, welche mindestens zwei Thiolgruppen pro Molekül aufweisen. Bevorzugte Polythiole werden beispielsweise ausgewählt aus der Gruppe, bestehend aus einfachen Alkanthiolen, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol oder 2-Methylcyclohexan-2,3-dithiol, Thioethergruppen enthaltenden Polythiolen, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimer-capto-3,6,9-trithiaundecan, 5,7-Dimercaptomethyl-1,11-dimercapto-3,6,9-trithiaundecan, 5,6-Bis-(mercaptoethylthio)-1,10-dimercapto-3,8-dithiadecan, 4,5-Bis-(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis(mercaptoethylthio)methan, Tris(mercapto-ethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercapto-ethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian oder 2-(3-Bis(mercaptomethyl)-2-thiapropyl)-1,3-dithiolan, Polyesterthiolen, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3-mercaptopropionat), Trimethylolethan-tris(2-mercaptoacetat), Trimethylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethylsulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat oder Bis(2-mercaptoethylester)thiodipropionat und aromatischen Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrakis(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl oder 4,4'-Dimercaptobiphenyl. Solche Polythiole können einzeln oder auch in Form beliebiger Gemische untereinander verwendet werden.

Ebenso sind auch Schwefel enthaltende Hydroxyverbindungen geeignet. Solche Verbindungen enthalten bevorzugt mindestens ein Schwefel-Atom in Form von Thiogruppen, Thioethergruppen, Thioesterurethangruppen, Esterthiourethangruppen und/oder Polythioesterthiourethangruppen sowie mindestens eine OH-Gruppe.

Bevorzugte Schwefel enthaltende Hydroxyverbindungen können ausgewählt werden aus der Gruppe, bestehend aus einfachen Mercaptoalkoholen, wie z. B. 2-Mercaptoethanol, 3-Mercaptopropanol, 1,3-Dimercapto-2-propanol, 2,3-Dimercaptopropanol oder Dithioerythritol, Thioetherstrukturen enthaltenden Alkoholen, wie z. B. Di(2-hydroxyethyl)sulfid, 1,2-Bis(2-hydroxyethylmercapto)ethan, Bis(2-hydroxyethyl)disulfid oder 1,4-Dithian-2,5-diol, und Schwefel enthaltende Diole mit Polyesterurethan-, Polythioesterurethan-, Polyesterthiourethan- oder Polythioesterthiourethanstruktur der in der EP-A 1 640 394 genannten Art. Solche Schwefel enthaltenden Hydroxyverbindungen können einzeln oder auch in Form beliebiger Gemische untereinander verwendet werden.

Besonders bevorzugte Schwefel enthaltende Verbindungen sind Polyether- und Polyesterthiole der genannten Art. Ganz besonders bevorzugte Verbindungen können ausgewählt werden aus der Gruppe, bestehend aus 4-Mercaptomethyl-1,8-dimercapto-3,6-dithiaoctan, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, Trimethylolpropan-tris(2-mercaptoacetat), Trimethylolpropan-tris(3-mercaptopropionat), Pentaerythrit-tetrakis(2-mercaptoacetat) und Pentaerythrit-tetrakis(3-mercaptopropionat).

Ebenso sind auch Carbonsäuren, Carbonsäureanhydride und Epoxide als Verbindungen mit isocyanat-reaktiven Gruppen geeignet.

Es ist ebenfalls möglich, dass die isocyanat-reaktive Komponente Gemische verschiedener Verbindungen mit isocyanat-reaktiven-Gruppen umfasst.

Grundsätzlich kann die Polyisocyanatkomponente A beliebige Mischungen verschiedener Polyisocyanate enthalten. Dies können die bereits oben beschriebenen Mischungen oligomerer und monomerer Polyisocyanate sein. Es kann sich auch um Mischungen verschiedener isocyantterminierter Präpolymere handeln. Durch die freie Kombination aller geeigneten Polyisocyanate ist es möglich, die Eigenschaften der Beschichtung wunschgemäß einzustellen.

Ebenfalls ist es erfindungsgemäß, isocyanat-terminierte Präpolymere mit monomeren oder oligomeren Polyisocyanaten zu mischen. Diese Ausführungsform der Erfindung hat den Vorteil, dass monomere und/oder oligomere Polyisocyanate benutzt werden können, um die Viskosität eines isocyanatterminierten Präpolymers herabzusetzen. Da

die monomeren/oligomeren Polyisocyanate durch ihre Isocyanatgruppen untereinander und mit dem isocyanat-terminierten Präpolymer vernetzt werden können, sind diese am Ende des Verfahrensschritts c) in der Beschichtung gebunden. Sie wirken so als Reaktivverdünner.

**Verhältnis aromatischer zu aliphatischen Polyisocyanaten**

Vorzugsweise enthalten wenigstens 50 Gew.-%, stärker bevorzugt wenigstens 65 Gew.-%, noch stärker wenigstens 80 Gew.-% und am stärksten bevorzugt wenigstens 90 Gew.-% der in der Polyisocyanatzusammensetzung A enthaltenen monomeren und oligomeren Polyisocyanate Isocyanate mit aliphatisch gebundenen Isocyanatgruppen. Ganz besonders bevorzugt enthält die Polyisocyanatzusammensetzung A als Polyisocyanate nur solche mit aliphatisch gebundenen Isocyanatgruppen.

**Vernetzungskatalysator B1**

Geeignete Katalysatoren B1 für das erfindungsgemäße Verfahren sind prinzipiell alle Verbindungen, welche die Vernetzung von Isocyanatgruppen beschleunigen. Diese Vernetzung erfolgt erfindungsgemäß durch Bildung wenigstens einer Struktur ausgewählt aus der Gruppe bestehend aus Uretdion-, Iminoxadiazindion-, Allophanat, Harnstoff- und Isocyanuratgruppen. Welche dieser Strukturen überwiegend oder ausschließlich gebildet wird, hängt vom verwendeten Katalysator und den Reaktionsbedingungen ab.

Gemäß einer bevorzugten Ausführungsform führt die "katalytische Vernetzung" durch den Katalysator B1 dazu, dass vorwiegend Cyclotrimerisierungen von mindestens 30 %, vorzugsweise mindestens 50 %, besonders bevorzugt mindestens 60 %, insbesondere mindestens 70 % und ganz besonders bevorzugt mindestens 80 % der in der Polyisocyanatzusammensetzung A vorliegenden Isocyanatgruppen, zu Isocyanuratstruktureinheiten umgesetzt werden. Nebenreaktionen, insbesondere solche zu Uretdion-, Allophanat-, und/oder Iminooxadiazindionstrukturen treten jedoch üblicherweise auf und können sogar gezielt genutzt werden, um z.B. den Tg-Wert des erhaltenen Polyisocyanuratkunststoffs vorteilhaft zu beeinflussen.

Geeignete Katalysatoren B1 für das erfindungsgemäße Verfahren sind beispielsweise einfache tertiäre Amine, wie z.B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Vernetzungskatalysatoren B1 für das erfindungsgemäße Verfahren ebenfalls geeignet sind ebenfalls etliche unterschiedliche Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, -hydroxide, -carbonate, -alkoholate und - phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979) beschriebenen Art, wie z.B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Weitere für das erfindungsgemäße Verfahren geeignete Vernetzungskatalysatoren B1 sind beispielsweise die aus der DE-A 1 667 309, EP-A 0 013 880 und EP-A 0 047 452 bekannten quaternären Ammoniumhydroxyde, wie z.B. Tetraethylammoniumhydroxid, Trimethylbenzylammoniumhydroxid, N,N-Dimethyl-N-dodecyl-N-(2-hydroxyäthyl)ammoniumhydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2] -octan), die aus EP-A 37 65 oder EP-A 10 589 bekannten quaternären Hydroxyalkylammoniumhydroxide, wie z.B.

N,N,N-Trimethyl-N-(2-hydroxyäthyl)-ammoniumhydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)ammonium-2-ethylhexanoat oder N,N,N-Tributyl-N-(4-methoxybenzyl)ammonium-pivalat, die aus der WO 2005/087828 bekannten tetrasubstituierten Ammonium-$\alpha$-hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C8-C10-Alkylresten, N,N,N,N-Tetra-n-butylammoniumfluorid, N,N,N-Trimethyl-N-benzylammonium-fluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyl-trimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholinbicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere für das erfindungsgemäße Verfahren geeignete Vernetzungskatalysatoren finden sich beispielsweise in J. H. Saunders und K. C. Frisch, Polyurethanes Chemistry and Technology, S. 94 ff (1962) und der dort zitierten Literatur.

Die Katalysatoren B1 können sowohl einzeln als auch in Form beliebiger Gemische untereinander im erfindungsgemäßen Verfahren eingesetzt werden.

In einer bevorzugten Ausführungsform der vorliegenden Erfindung ist wenigstens ein Vernetzungskatalysator B1 ein alkalisch reagierendes Salz ausgewählt aus der Gruppe bestehend aus Alkoholaten, Amiden, Phenolaten, Carboxylaten, Carbonaten, Hydrogencarbonaten, Hydroxiden, Cyaniden, Isocyaniden, Thiocyaniden, Sulfinaten, Sulfiten, Phosphinaten, Phosphonaten, Phosphaten oder Fluoriden. Das Gegenion ist vorzugsweise ausgewählt aus der Gruppe bestehend aus Metallionen, Ammonium-, Phosphonium- und Schwefelverbindungen.

Besonders bevorzugt sind Alkoholate und Carboxylate mit Metall- oder Ammoniumionen als Gegenion. Geeignete Carboxylate sind die Anionen aller aliphatischen oder cycloaliphatischen Carbonsäuren, bevorzugt solcher mit Mono- oder Polycarbonsäuren mit 1 bis 20 C-Atomen. Geeignete Metallionen sind abgeleitet von Alkali- oder Erdalkalimetallen, Mangan, Eisen, Cobalt, Nickel, Kupfer, Zink, Zirkonium, Cer, Zinn, Titan, Hafnium oder Blei. Bevorzugte Alkalimetalle sind Lithium, Natrium und Kalium, besonders bevorzugt Natrium und Kalium. Bevorzugte Erdalkalimetalle sind Magnesium, Calcium, Strontium und Barium.

Ganz besonders bevorzugt wird Kaliumacetat als Vernetzungskatalysator B1 alleine oder in Kombination mit anderen Vernetzungskatalysatoren B1 verwendet.

Wenn der Verfahrensschritt c) bei Raumtemperatur durchgeführt werden soll, ist die Verwendung von Kaliumacetat in Kombination mit Zinnoctoat und/oder Tributylzinn als Vernetzungskatalysatoren B1 besonders bevorzugt. In dieser Ausführungsform ist die Verwendung von Polyethern B2 besonders bevorzugt.

Wenn blockierte Isocyanate wie weiter oben in dieser Anmeldung definiert in der Polyisocyanatzusammensetzung A enthalten sind, ist die Verwendung der bekannten Natrium- und Kalium-Salzen von linearen oder verzweigten Alkancarbonsäure mit bis zu 14 C-Atomen, wie z.B. Buttersäure, Valeriansäure, Capronsäure, 2-Ethylhexalsäure, Heptansäure, Caprylsäure, Pelargonsäure sowie höherer Homologe als Vernetzungskatalysator B1 bevorzugt. Ganz besonders bevorzugt ist in diesem Fall die Verwendung von Kalium-2-Ethylhexanoat als Vernetzungskatalysator B1.

In einer besonderen Ausführungsform, insbesondere im Zusammenhang mit temperaturaktivierbaren blockierten Isocyanaten, ist die Verwendung von hochreaktiven Katalysatoren, vorzugsweise auf Basis von Alkali- und Erdalkali-Alkoholaten, bevorzugt.

**Polyether B2**

In einer bevorzugten Ausführungsform der vorliegenden Erfindung enthält die Zusammensetzung B zusätzlich zu dem wenigstens einen Vernetzungskatalysator B1 einen Polyether B2. Dies ist insbesondere dann bevorzugt, wenn der Katalysator Metallionen enthält. Bevorzugte Polyether B2 sind ausgewählt aus der Gruppe bestehend aus Kronenether, Diethylenglycol, Polyethylen- und Polypropylenglykolen. Als besonders praxisgerecht hat sich im erfindungsgemäßen Verfahren erwiesen, als Polyether B2 ein Polyethylenglykol oder einen Kronenether, besonders bevorzugt 18-Krone-6 oder 15-Krone-5, zu verwenden. Bevorzugt enthält die Zusammensetzung B ein Polyethylenglykol mit einem zahlenmittleren Molekulargewicht von 100 bis 1000 g/mol, bevorzugt 300 g/mol bis 500 g/mol und insbesondere 350 g/mol bis 450 g/mol. Ganz besonders bevorzugt enthält die Zusammensetzung B die Kombination aus basischen Salzen

von Alkali- oder Erdalkalimetallen wie oben definiert mit einem Polyether.

Insbesondere ist bevorzugt, dass die Zusammensetzung B Kaliumacetat und 18-Krone-6 enthält.

**Katalysatorlösungsmittel B3**

Geeignete Katalysatorlösungsmittel B3 sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykol-monomethyl- oder - ethyletheracetat, Diethylenglykolethyl- und -butyletheracetat, Propylenglykolmonomethyletheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es ist erfindungsgemäß aber ebenfalls möglich, Katalysatorlösungsmittel B3 zu verwenden, die gegenüber Isocyanat reaktive Gruppen tragen. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmono-butylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N monosubstituierte Amide, wie z.B. N-Methylformamid, N-Methylacetamid, Cyanacetamid oder 2-Pyrrolidinon oder beliebige Gemische derartiger Lösungsmittel.

**Härtung**

Das Aushärten der Polyisocyanatzusammensetzung A erfolgt durch die Ausbildung wenigstens einer Struktur ausgewählt aus der Gruppe bestehend aus Uretdion-, Iminoxadiazindion-, Oxadiazintrion-, Allophanat, Harnstoff- und Isocyanuratgruppen zwischen den Isocyanatgruppen der vorhandenen Polyisocyanate. Hierdurch werden die in der Polyisocyanatzusammensetzung A vorliegenden Polyisocyanate miteinander vernetzt und bilden eine feste Schicht. Im Fall der Bildung von Allophanatgruppen erfolgt die katalytische Vernetzung durch Reaktion einer Isocyanatgruppe mit einer in einem oligomeren Polyisocyanat vorliegenden Urethangruppe. Im Fall der Bildung von Harnstoffgruppen erfolgt die Vernetzung durch Reaktion einer Isocyanatgruppe mit einer in einem der Isocyanate der Polyisocyanatzusammensetzung A vorliegenden Aminogruppe. Besagte Aminogruppe entsteht bevorzugt während der Vernetzungsreaktion durch die Reaktion einer Isocyanatgruppe mit Wasser (z.B. Luftfeuchtigkeit) und anschließender Abspaltung von Kohlendioxyd.

Wenn in der Polyisocyanatzusammensetzung A oder der Zusammensetzung B Hydroxylgruppen vorhanden sind, ist auch die Bildung von Urethangruppen möglich.

Die Aushärtung erfolgt bei einer Temperatur, die so hoch ist, dass der in der Zusammensetzung B enthaltene wenigstens eine Katalysator B1 die oben beschriebenen Vernetzungsreaktionen bewirken kann. Die optimale Reaktionstemperatur beträgt vorzugsweise von 10 °C bis 300 °C, stärker bevorzugt von 20 °C bis 250°C und besonders bevorzugt 20 °C bis 200 °C. Die Reaktionstemperatur kann während des gesamten Aushärteprozesses zum Polyisocyanurat im genannten Bereich konstant gehalten werden oder aber beispielsweise über mehrere Stunden linear oder stufenweise bis auf eine Temperatur größer 80 °C, vorzugsweise größer 100 °C und stärker bevorzugt bis auf größer 130 °C aufgeheizt werden. Wenn hier von "Reaktionstemperatur" die Rede ist, so ist damit die Umgebungstemperatur an der Oberfläche gemeint.

In einer bevorzugten Ausführungsform der vorliegenden Erfindung erfolgt die Härtung in Verfahrensschritt c) zweistufig. In einem Verfahrensschritt c1) liegt die Reaktionstemperatur vorzugsweise im Bereich von 50 °C bis 300 °C, stärker bevorzugt 60 °C bis 250 °C und besonders bevorzugt 80 °C bis 200 °C. In einem darauf folgenden Verfahrensschritt c2) erfolgt die Härtung bei reduzierter Temperatur, vorzugsweise im Bereich von 5 °C bis 79 °C, stärker bevorzugt von 10 °C bis 59 °C und besonders bevorzugt von 15 °C bis 40 °C. Es ist bevorzugt, dass dieser zweite Schritt ohne aktive Erwärmung des Werkstoffs durchgeführt wird. Weiterhin ist bevorzugt, dass der Werkstoff offen bei normaler Luftfeuchtigkeit gelagert wird. "Normale Luftfeuchtigkeit" bezeichnet in diesem Zusammenhang vorzugsweise eine absolute Luftfeuchtigkeit zwischen 1 $g/m^3$ und 15 $g/m^3$. Weiterhin ist bevorzugt, dass der Verfahrensschritt c1) in kürzerer Zeit durchgeführt wird als der Verfahrensschritt c2).

Eine Ausführungsform, bei der die Härtung zweistufig geführt wird, bietet den großen Vorteil, dass die Härtung

in Verfahrensschritt c1) nur wenig Zeit beansprucht und nur solange durchgeführt werden muss, bis die beschichtete Oberfläche nicht mehr klebt und die Eigenschaften es erlauben, das Werkstück weiter zu bearbeiten oder bestimmungsgemäß zu benutzen. Der Verfahrensschritt c2) erfolgt dann ohne zusätzliche Maßnahmen während der weiteren Bearbeitung, Lagerung oder Nutzung des beschichteten Werkstücks bei normalen Umgebungsbedingungen. Die Bildung der für die Entstehung von Harnstoffgruppen benötigten Aminogruppen kann durch die Einwirkung von Luftfeuchtigkeit auf Isocyanatgruppen erfolgen.

Der Verfahrensschritt c1) wird vorzugsweise solange durchgeführt, bis die beschichtete Oberfläche nicht mehr klebt. Dies ist vorzugsweise dann der Fall, wenn wenigstens 30 mol-%, stärker bevorzugt wenigstens 50 mol-%, noch stärker bevorzugt wenigstens 60 mol-%, ganz besonders stark bevorzugt 70 mol-% und am stärksten bevorzugt wenigstens 80 mol-% der in der Polyisocyanatzusammensetzung A ursprünglich vorhandenen Isocyanatgruppen verbraucht sind. Insbesondere ist bevorzugt, dass wenigstens 90 mol-% der ursprünglich vorhandenen Isocyanatgruppen am Ende des Verfahrensschritts c1) verbraucht sind.

Bei Verwendung blockierter Isocyanate muss zu Beginn des Verfahrensschrittes c) eine Temperatur erreicht werden, die eine Abspaltung des gewählten Blockierungsmittels bewirkt. Diese Temperatur liegt bei wenigstens 120 °C, stärker bevorzugt bei wenigstens 150 °C und am stärksten bevorzugt bei wenigstens 180 °C. Diese Temperaturen werden gehalten, bis das Blockierungsmittel von wenigstens 50 mol-%, stärker bevorzugt wenigstens 70 mol-%, noch stärker bevorzugt wenigstens 90 mol-% und am stärksten bevorzugt wenigstens 95 mol-% der ursprünglich blockierten Isocyanatgruppen abgespalten ist.

Abhängig vom gewählten Vernetzungskatalysator B1 und der gewählten Reaktionstemperatur ist die Vernetzungsreaktion nach einem Zeitraum von wenigen Sekunden bis zu mehreren Stunden durch "vollständige Aushärtung" der Polyisocyanatzusammensetzung A weitestgehend abgeschlossen, wie unten definiert. In der Praxis hat sich gezeigt, dass die Vernetzungsreaktion bei Reaktionstemperaturen von größer 80 °C üblicherweise in weniger als 12 h weitestgehend abgeschlossen ist. Nach einer bevorzugten Ausführungsform der Erfindung ist die Vernetzungsreaktion bei einer Reaktionstemperatur von größer 80 °C in weniger als 12 h, besonders bevorzugt weniger als 5 h ganz besonders bevorzugt weniger als 1 h abgeschlossen. Der Verlauf der Reaktion kann durch spektroskopische Methoden, beispielsweise durch IR-Spektroskopie anhand der Intensität der Isocyanatbande bei ca. 2270 $cm^{-1}$ verfolgt werden. Wenn der Verfahrensschritt c) ganz oder teilweise bei Temperaturen unter 80 °C durchgeführt wird, kann die vollständige Aushärtung der Polyisocyanatzusammensetzung A auch mehrere Tage, vorzugsweise bis zu 14 Tagen, beanspruchen.

Bei den durch das erfindungsgemäße Verfahren erhältlichen Beschichtungen handelt es sich vorzugsweise um hochumgesetzte Polymere, d.h. solche, die am Ende des Verfahrensschritts c) "vollständig ausgehärtet" sind. Als "vollständig ausgehärtet" wird im Sinne der vorliegenden Erfindung eine Polyisocyanatzusammensetzung A angesehen, wenn mindestens 70 mol-%, vorzugsweise mindestens 80 mol-%, besonders bevorzugt mindestens 90 mol-% der ursprünglich darin vorhandenen freien Isocyanatgruppen abreagiert haben. Anders ausgedrückt sind in der ausgehärteten Beschichtung vorzugsweise nur noch höchstens 30 mol-%, stärker bevorzugt höchstens 20 mol-%, und besonders bevorzugt höchstens 10 mol-% der ursprünglich in der Polyisocyanatzusammensetzung A enthaltenen Isocyanatgruppen vorhanden.

Insbesondere ist bevorzugt, dass in der ausgehärteten Beschichtung nur noch 5 mol-% der ursprünglich darin vorhandenen freien Isocyanatgruppen vorhanden sind. Dies bedeutet spiegelbildlich eine Umsetzung von wenigstens 95 mol-% der ursprünglich vorhandenen freien Isocyanatgruppen.

Der Prozentsatz an noch vorhandenen Isocyanat-Gruppen kann durch einen Vergleich des Gehalts an Isocyanat-Gruppen in Gew.-% in der ursprünglichen Polyisocyanatzusammensetzung A mit dem Gehalt an Isocyanat-Gruppen in Gew.-% im Reaktionsprodukt, beispielsweise durch vorgenannten Vergleich der Intensität der Isocyanatbande bei ca. 2270 $cm^{-1}$ mittels IR-Spektroskopie, bestimmt werden. Als interne Referenz werden $CH_2$- und $CH_3$-Schwingungen als Bezugsgröße für die NCO-Bande verwendet und in Relation gesetzt. Dies wird sowohl für die Referenzmessung vor der Vernetzung als auch für die Messung nach der Vernetzung angewendet.

Mit einem Teil der weiter oben beschriebenen Katalysatoren B1 ist auch eine Härtung der Polyisocyanatzusammensetzung A bei Raumtemperatur möglich, wobei "Raumtemperatur" hier einen Temperaturbereich zwischen 10 und 47°C bezeichnet. In diesem Fall muss der Verfahrensschritt c) unter Umständen über mehrere Tage geführt werden.

Wenn das erfindungsgemäße Verfahren mit den oben in dieser Anmeldung beschriebenen Phosphinkatalysatoren und bei Raumtemperatur durchgeführt wird, entstehen im Zuge der katalytischen Vernetzung neben Isocyanuratgruppen auch Uretdiongruppen. Es ist bevorzugt, dass bei dieser Ausführungsform wenigstens 30 mol-%, stärker bevorzugt wenigstens 40 mol-% und am stärksten bevorzugt wenigstens 60 mol-% der in der Polyisocyanatzusammensetzung A ursprünglich vorhandenen Isocyanatgruppen zu Uretdion- und Isocyanuratgruppen umgesetzt werden.

Eine weitere Ausführungsform der vorliegenden Erfindung betrifft Oberflächen, die mit dem erfindungsgemäßen Verfahren beschichtet sind.

**Vorteile**

Werden Katalysator und Isocyanat-Komponente vor dem Auftragen gemischt, so setzt die Reaktion bereits mit der Mischung ein. Dies hat zur Folge, dass das gemischte Material nur eine bestimmte Zeit (Verarbeitungszeit) genutzt werden kann. Ist durch die Reaktion z.B. die Viskosität zu stark angestiegen, dann kann das Material nicht mehr verarbeitet werden.

Die getrennte Auftragung von Katalysator und Isocyanat-Komponente hat den entscheidenden Vorteil, dass die Reaktion erst nach der Auftragung auf das Substrat einsetzt. Daher gibt es hier vor der Applikation keinen reaktionsbedingten Anstieg der Viskosität, solange die Komponenten sachgerecht gelagert werden. Die Sachgerechte Lagerung von Isocyanathaltigen Verbindungen umfasst dem Fachmann wohlbekannte Vorsichtsmaßnahmen wie Wasserausschluss, Lagerung in trockenen und wasserdampfdichten Gebinden bei Temperaturen <50°C.

Die folgenden Ausführungsbeispiele dienen nur dazu, die Erfindung zu illustrieren. Sie sollen den Schutzbereich der Patentansprüche nicht beschränken.

## Beispiele

**Methoden und verwendete Materialien:**

NCO-Zahl Bestimmung mittels FT-IR-Spektrometer ausgestattet mit einer ATR-Einheit

Für die Bestimmung der NCO-Zahl wurde ein FT- IR-Spektrometer (Tensor II) der Fa. Bruker, ausgestattet mit einer Platinum-ATR-Einheit, eingesetzt.

Bei allen Versuchen wurden die Komponenten auf eine Glasplatte appliziert und anschließend dem Temperaturprogramm unterworfen. Zur Messung wurde entweder die Flüssigkeit oder der Film von der Glasplatte abgehoben und anschließend auf der Platinum- ATR-Einheit kontaktiert. Hierzu wurden die Filme mit der Oberseite auf das 2 x 2 mm große Sichtfester der ATR-Einheit gelegt und mit Hilfe eines Stempels angepresst. Bei flüssigen Proben wird das Fenster mit einem Tropfen benetzt.

Bei der Messung dringt die IR-Strahlung je nach Wellenzahl 3- 4 μm in die Probe ein. Von der Probe wurde ein Absorptionsspektrum erstellt.

Um eine ungleichmäßige Kontaktierung der unterschiedlich harten Proben zu kompensieren, wurden an allen Spektren sowohl eine Grundlinienkorrektur als auch eine Normierung mit Hilfe des Auswerteprogramms OPUS durchgeführt.

Die Normierung wurde auf die $CH_2$- und $CH_3$-Banden bezogen. Hierfür wird der Wellenzahlbereich von 2600 bis 3200 ausgewählt. Das Programm bestimmte den höchsten Peak in diesem Bereich und skalierte das gesamte Spektrum so, dass dieser maximale Peak den Wert 2 erhält.

Zur Ermittlung der NCO-Zahl wurde der Peak im Wellenzahlbereich von 2170 bis 2380 (NCO-Peak) integriert.

Bestimmung der Umsetzung der NCO-Gruppen

Zur Bestimmung der Umsetzung der NCO-Gruppen benötigt man zunächst eine Bezugsgröße. Hierzu wurde die Isocyanat-Komponente zunächst ohne jegliche thermische Behandlung und ohne Umsetzung mittels FTIR vermessen. Für das Desmodur® N3600 erhielt man eine NCO-Zahl von 878 (siehe Beispiel 1). Den prozentualen Umsetzungsgrad erhielt man dann, indem man die nach einem Versuch ermittelte NCO-Zahl durch 878 teilte, den erhaltenen Wert von 1 subtrahierte und das Ergebnis anschließend mit 100 multiplizierte. So maß man z.B. in Beispiel 2 eine NCO-Zahl von 830. Daraus ergab sich dann:

$$830/878 = 0{,}9453$$

$$1 - 0{,}9453 = 0{,}05467$$

$$0{,}05467 * 100\,\% = 5{,}467\,\%$$

Der Umsetzungsgrad im Beispiel 2 ist also gerundet 5,5 %.

Tropfengewichtsbestimmung

Die Mehrzahl der applizierten Materialien wurden mit Hilfe eines Digitaldruckers (Dimatix DMP 2831, Druckkopf DMC-11610 (16 Düsen und eine nominelle Tropfengröße von 10 pl)) appliziert. Da das reale Tropfenvolumen und somit auch das Tropfengewicht von vielen Parametern abhängig ist, wurde dieses vor der Applikation bestimmt. Hierzu wurden 3 Millionen Tropfen in eine zuvor gewogene Kunststoffschale gedruckt und im direkten Anschluss das Nettogewicht bestimmt. Für die

Patentbeispiele wurden folgende Tropfengewichte bestimmt:

| | |
|---|---|
| Isocyanatkomponente: | 6,81289 * $10^{-9}$ g/Tropfen |
| Katalysatormischung: | 6,31944 * $10^{-9}$ g/Tropfen |

Desmodur® N3600

Lösemittelfreies Polyisocyanurat, basierend auf HDI, mit einem NCO-Gehalt von 23,0 ± 0,5 % (nach M105-ISO 11909) und einer Viskosität bei 23 °C von 1.200 ± 300 mPa·s (nach M014-ISO 3219/A.3.)

Butylacetat (BA)

Butylacetat 98/100 von Azelis, Antwerpen;

BYK® 141 und BYK® 331

Additive von BYK Additives & Instruments, Wesel

BYK 141 ist ein silikonhaltiger Entschäumer für lösemittelhaltige und lösemittelfreie Lacksysteme sowie kalthärtende Kunststoffanwendungen auf Polyurethanbasis.

BYK 331 ist ein silikonhaltiges Oberflächenadditiv für lösemittelhaltige, lösemittelfreie und wässrige Lacke und Druckfarben mit mittlerer Reduzierung der Oberflächenspannung und mittlerer Erhöhung der Oberflächenglätte

Isocyanat-Tinte

70 Gew.-Teile Desmodur®, 30 Gew.-Teile Butylacetat, 0,4 Gew.-Teile BYK® 141 und 0,03 Gew.-Teile BYK® 331

Kaliumacetat

Kaliumacetat mit einer Reinheit von ≥ 99 % von der Fa. Acros

18-Crown-6

18-Crown-6 mit einer Reinheit von ≥ 99 % von der Fa. Sigma Aldrich

Diethylenglykol

Diethylenglykol mit einer Reinheit von ≥ 99 % von der Fa. Sigma Aldrich

Katalysatormischung

177 Gew.-Teile Kaliumacetat, 475 Gew.-Teile 18-Crown-6 und 3115 Gew.-Teile Diethylenglykol. Kaliumacetat wird vorgelegt, dann wird zunächst der Kronenether zugegeben und anschließend das Diethylenglykol. Die Lösungsdauer betrug 2 Tage, wobei die Mischung während der achtstündigen Arbeitszeit jeweils stündlich einmal per Hand geschüttelt wurde und über Nacht ruhig stand.

Die Rohstoffe wurden, soweit nicht anders erwähnt, ohne weitere Reinigung oder Vorbehandlung eingesetzt.

**Durchführung:**

Der Katalysator sowie die Isocyanat-Tinte wurden mittels Digitaldrucker (Dimatix DMP 2831, Druckkopf DMC-11610 (16 Düsen und eine nominelle Tropfengröße von 10 pl)) auf eine zuvor gespülte und getrocknete Glasplatte

nacheinander so aufgetragen, dass die Schichten aufeinander lagen. Das Verhältnis der beiden Komponenten wurde über die Einstellung unterschiedlicher DPI eingestellt. Nach dem Auftrag wurden die beschichteten Glasplatten 10 Minuten abgelüftet und anschließend 10 Minuten bei 180 °C im Umlufttrockenschrank gehärtet. Nach der Härtung wurde mit Hilfe eines ATR-FT-IR-Gerätes die NCO-Zahl an der Oberfläche der Beschichtung bestimmt.

Als Vergleich wurden 50 µm eines vorgemischten Systems mit vergleichbarem Mischungsverhältnis auf eine Glaspatte gerakelt. Nach dem Auftrag wurden die beschichteten Glasplatten 10 Minuten abgelüftet und anschließend 10 Minuten bei 180 °C im Umlufttrockenschrank gehärtet und anschließend mit Hilfe eines ATR-FT-IR-Gerätes die NCO-Zahl an der Oberfläche der Beschichtung bestimmt.

Bei der Untersuchung der unterschiedlichen Auftragsgewichte wurden immer gleich viele Schichten Katalysator gedruckt, wie anschließend Isocyanat-Tinten-Schichten.

In weiteren Vergleichsbeispielen wurde nur die Isocyanatkomponente aufgetragen:

- nach dem Auftrag der Isocyanatkomponente wurde die Probe 10 Minuten abgelüftet, dann 10 Minuten bei 180 °C im Umlufttrockenschrank temperiert und anschließend die NCO-Zahl an der Oberfläche bestimmt
- nach dem Auftrag der Isocyanat-Tinte wurde die Probe 10 Minuten abgelüftet, dann 10 Minuten bei 180 °C im Umlufttrockenschrank temperiert und anschließend die NCO-Zahl an der Oberfläche bestimmt

**Ergebnisse:**

| Beispiel | Auftrag | Beschreibung/Anmerkung | NCO-Zahl an der Oberfläche bzw. Ergebnis | Umgesetzte NCO-Gruppen [%] |
|---|---|---|---|---|
| 1 (Vergleich) | Desmodur® N3600 ohne Temperatur | Ermittlung des Basiswertes für reines Polyisocyanat | 878 | 0 |
| 2 (Vergleich) | Desmodur® N3600, 10’ Ablüften, 10’ bei 180°C im Umlufttrockenschrank | Ermittlung des Basiswertes für reines Polyisocyanat | 830 | 5,5 |
| 3 (Vergleich) | Desmodur® N3600 (70 % in Butylacetat), 10’ Ablüften, 10’ bei 180°C im Umlufttrockenschrank | Ermittlung des Basiswertes für 70 % Polyisocyanat in Butylacetat mit anschließender Temperaturbelastung | 800 | 8,9 |
| 4 (Vergleich) | Aufrakeln von 50 µm einer Desmodur® N3600 (pur) / Katalysatormischung (Mischungsverhältnis 33/1), 10’ Ablüften, 10’ bei 180°C im Umlufttrockenschrank | Vergleichsbeispiel für ein vorgemischtes System, welches durch Rakeln auf eine Glasplatte aufgetragen wurde. Das Polyisocyanat wurde unverdünnt eingesetzt | 7 | 99,2 |
| 5 (Vergleich) | Aufrakeln von 50 µm einer Mischung aus Desmodur® N3600 (70 % in Butylacetat) und Katalysator (Mischungsverhältnis 33/1, ohne Berücksichtigung des Lösemittels), 10’ Ablüften, 10’ bei 180°C im Umlufttrockenschrank | Vergleichsbeispiel für ein vorgemischtes System, welches durch Rakeln auf eine Glasplatte aufgetragen wurde. Das Polyisocyanat wurde 70 % in Butylacetat eingesetzt | 47 | 94,6 |

(fortgesetzt)

| Beispiel | Auftrag | Beschreibung/Anmerkung | NCO-Zahl an der Oberfläche bzw. Ergebnis | Umgesetzte NCO-Gruppen [%] |
|---|---|---|---|---|
| 6 | Schicht 1: Kat (211 DPI)<br>Schicht 2: Isocyanat-Tinte (1400 DPI)<br>10' Ablüften, 10' bei 180°C im Umlufttrockenschrank härten | Berechnetes Auftragsgewicht:<br>Isocyanat-Tinte :<br>20,7 g/m$^2$ (nass)<br>14,5 g/m$^2$ (fest)<br>Katalysator-Tinte:<br>0,44 g/m$^2$ | 17 | 98,1 |
| 7 | Schicht 1: Isocyanat-Tinte (1400 DPI)<br>Schicht 2: Kat (211 DPI)<br>10' Ablüften, 10' bei 180°C im Umlufttrockenschrank härten | Berechnetes Auftragsgewicht:<br>Isocyanat-Tinte :<br>20,7 g/m$^2$ (nass)<br>14,5 g/m$^2$ (fest)<br>Katalysator-Tinte:<br>0,44 g/m$^2$ | 147 | 83,3 |
| 8 | Schicht 1: Kat (149 DPI)<br>Schicht 2: Isocyanat-Tinte (1400 DPI)<br>Schicht 3: Kat (149 DPI)<br>10' Ablüften, 10' bei 180°C im Umlufttrockenschrank härten | Berechnetes Auftragsgewicht:<br>Isocyanat-Tinte :<br>20,7 g/m$^2$ (nass)<br>14,5 g/m$^2$ (fest)<br>Katalysator-Tinte:<br>2 * 0,22 g/m$^2$ | 26 | 97,0 |
| 9 | Schicht 1: Isocyanat-Tinte (990 DPI)<br>Schicht 2: Kat (211 DPI)<br>Schicht 3: Isocyanat-Tinte (990 DPI)<br>10' Ablüften, 10' bei 180°C im Umlufttrockenschrank härten | Berechnetes Auftragsgewicht:<br>Isocyanat-Tinte :<br>2 * 10,3 g/m$^2$ (nass)<br>2 * 7,2 g/m$^2$ (fest)<br>Katalysator-Tinte:<br>0,44 g/m$^2$ | 236 | 73,1 |
| 10 | Schicht 1: 2x Kat (211 DPI)<br>Schicht 2: 2x Isocyanat-Tinte (1400 DPI)<br>10' Ablüften, 10' bei 180°C im Umlufttrockenschrank härten | Berechnetes Auftragsgewicht:<br>Isocyanat-Tinte :<br>41,4 g/m$^2$ (nass)<br>29,0 g/m$^2$ (fest)<br>Katalysator-Tinte: 0,87 g/m$^2$ | 11 | 98,7 |
| 11 | Schicht 1: 3x Kat (211 DPI)<br>Schicht 2: 3x Isocyanat-Tinte (1400 DPI)<br>10' Ablüften, 10' bei 180°C im Umlufttrockenschrank härten | Berechnetes Auftragsgewicht:<br>Isocyanat-Tinte :<br>62,1 g/m$^2$ (nass)<br>43,5 g/m$^2$ (fest)<br>Katalysator-Tinte:<br>1,31 g/m$^2$ | 24 | 97,3 |

(fortgesetzt)

| Beispiel | Auftrag | Beschreibung/Anmerkung | NCO-Zahl an der Oberfläche bzw. Ergebnis | Umgesetzte NCO-Gruppen [%] |
|---|---|---|---|---|
| 12 | Schicht 1: 4x Kat (211 DPI)<br>Schicht 2: 4x Isocyanat-Tinte (1400 DPI)<br>10' Ablüften, 10' bei 180°C im Umlufttrockenschrank härten | Berechnetes Auftragsgewicht: Isocyanat-Tinte :<br>82,8 g/m$^2$ (nass)<br>58,0 g/m$^2$ (fest)<br>Katalysator-Tinte:<br>1,74 g/m$^2$ | 61 | 93,1 |
| 13 | Schicht 1: 5x Kat (211 DPI)<br>Schicht 2: 5x Isocyanat-Tinte (1400 DPI)<br>10' Ablüften, 10' bei 180°C im Umlufttrockenschrank härten | Berechnetes Auftragsgewicht:<br>Isocyanat-Tinte :<br>103,5 g/m$^2$ (nass)<br>72,4 g/m$^2$ (fest)<br>Katalysator-Tinte: 2,18 g/m$^2$ | 36 | 95,9 |
| 14 | Schicht 1: 6x Kat (211 DPI)<br>Schicht 2: 6x Isocyanat-Tinte (1400 DPI)<br>10' Ablüften, 10' bei 180°C im Umlufttrockenschrank härten | Berechnetes Auftragsgewicht:<br>Isocyanat-Tinte :<br>124,2 g/m$^2$ (nass)<br>86,9 g/m$^2$ (fest)<br>Katalysator-Tinte:<br>2,62 g/m$^2$ | 67 | 92,4 |
| 15 | Schicht 1: 7x Kat (211 DPI)<br>Schicht 2: 7x Isocyanat-Tinte (1400 DPI)<br>10' Ablüften, 10' bei 180°C im Umlufttrockenschrank härten | Berechnetes Auftragsgewicht:<br>Isocyanat-Tinte :<br>144,9 g/m$^2$ (nass)<br>101,4 g/m$^2$ (fest)<br>Katalysator-Tinte:<br>3,05 g/m$^2$ | 289 | 67,1 |
| 16 | Schicht 1: Kat (211 DPI), flächig<br>Schicht 2: Isocyanat-Tinte (1400 DPI), Image<br>10' Ablüften, 10' bei 180°C im Umlufttrockenschrank härten, Überschuss an Katalysator mit Butylacetat abwaschen | Berechnetes Auftragsgewicht:<br>Isocyanat-Tinte :<br>20,7 g/m$^2$ (nass)<br>14,5 g/m$^2$ (fest)<br>Katalysator-Tinte:<br>0,44 g/m$^2$ | Man erhält ein klares Image | |
| 17 | Schicht 1: Isocyanat-Tinte (1400 DPI), flächig<br>Schicht 2: Kat (211 DPI), Image<br>10' Ablüften, 10' bei 180°C im Umlufttrockenschrank härten, Überschuss an Isocyanat-Tinte mit Butylacetat abwaschen | Berechnetes Auftragsgewicht:<br>Isocyanat-Tinte :<br>20,7 g/m$^2$ (nass)<br>14,5 g/m$^2$ (fest)<br>Katalysator-Tinte:<br>0,44 g/m$^2$ | Man erhält ein klares Image | |

(fortgesetzt)

| Beispiel | Auftrag | Beschreibung/Anmerkung | NCO-Zahl an der Oberfläche bzw. Ergebnis | Umgesetzte NCO-Gruppen [%] |
|---|---|---|---|---|
| 18 | Schicht 1: Kat (211 DPI), Image<br>Schicht 2: Isocyanat-Tinte (1400 DPI), flächig<br>10' Ablüften, 10' bei 180°C im Umlufttrockenschrank härten, Überschuss an Isocyanat-Tinte mit Butylacetat abwaschen | Berechnetes Auftragsgewicht:<br>Isocyanat-Tinte :<br>20,7 $g/m^2$ (nass)<br>14,5 $g/m^2$ (fest)<br>Katalysator-Tinte:<br>0,44 $g/m^2$ | Man erhält ein stark verzerrtes Image | |
| 19 | Schicht 1: Isocyanat-Tinte (1400 DPI), Image<br>Schicht 2: Kat (211 DPI), flächig<br>10' Ablüften,10' bei 180°C im Umlufttrockenschrank härten, Überschuss an Katalysator mit Butylacetat abwaschen | Berechnetes Auftragsgewicht:<br>Isocyanat-Tinte :<br>20,7 $g/m^2$ (nass)<br>14,5 $g/m^2$ (fest)<br>Katalysator-Tinte:<br>0,44 $g/m^2$ | Man erhält ein leicht verzerrtes Image | |

Wenn das Desmodur® N3600 lediglich das Temperaturprogramm durchläuft, dann werden ca. 5,5% der Isocyanatgruppen umgesetzt (Beispiel 2). Wird das Polyisocyanat zuvor mit Butylacetat auf einen Festkörper von 70 % verdünnt, so werden bei dem Ablüftungs- und Temper-Schritt ca. 9 % der NCO-Gruppen umgesetzt (Beispiel 3). In beiden Fällen ist das Produkt allerdings noch flüssig. Erst wenn ein Katalysator eingesetzt wird (Vergleichsbeispiele 4 und 5 sowie erfindungsgemäße Beispiele 6 bis 15), erhält man klebfreie Filme.

Aus den Beispielen geht hervor, dass Umsetzungsgrade von wenigstens 50 %, unabhängig von der Reihenfolge der Auftragung und bis zu einem Auftragsgewicht (fest) auch noch bei Schichtdicken von 100 $g/m^2$ erzielt werden können.

Eine Nachhärtung bei Raumtemperatur würde zum vollständigen Umsatz auch der verbliebenen Isocyanatgruppen führen.

Die Beispiele 4 bis 6 zeigen, dass man vergleichbare Ergebnisse unabhängig davon erhält, ob man den Katalysator zuvor einmischt oder diesen zunächst getrennt aufdruckt und erst dann die Isocyanattinte druckt.

Die Beispiele 6 bis 9 belegen, dass es besonders vorteilhaft sein kann, erst den Katalysator zu drucken und im zweiten Schritt die Isocyanattinte.

In den Beispielen 16 bis 19 wir gezeigt, dass es auch möglich ist, eine Komponente flächig und die andere Komponente nur lokal aufzutragen und im Anschluss den nicht ausgehärteten Anteil abzuwaschen. Hier zeigen die Beispiele deutlich dass die Abbildungsschärfe immer dann deutlich besser ist, wenn die partielle Beschichtung (z.B. ein Bild) mit der zweiten Schicht aufgetragen wird.

## Patentansprüche

**1.** Verfahren zur Beschichtung von Oberflächen enthaltend die Schritte

a) Auftragen einer Polyisocyanatzusammensetzung A auf eine Oberfläche;
b) Auftragen einer Zusammensetzung B enthaltend wenigstens einen Vernetzungskatalysator B1 auf dieselbe Oberfläche; und
c) Aushärten der Polyisocyanatzusammensetzung A durch katalytische Vernetzung der Polyisocyanatzusammensetzung A, wobei das molare Verhältnis der Summe von freien und reversibel blockierten Isocyanatgruppen zur Summe der mit Isocyanatgruppen reaktiven Gruppen zu Beginn des Verfahrensschritts wenigstens 3 : 1 beträgt;
mit der Maßgabe, dass die Verfahrensschritte a) und b) in beliebiger Reihenfolge oder auch gleichzeitig, aber

vor dem Verfahrensschritt c) so durchgeführt werden, dass eine Vermischung der Polyisocyanatzusammensetzung A und des wenigstens einen Katalysators B erst auf der Oberfläche erfolgt;
und mit der Maßgabe, dass der Verfahrensschritt a) oder der Verfahrensschritt b) wenigstens zweimal ausgeführt wird.

**2.** Das Verfahren nach Anspruch 1, wobei die Polyisocyanatzusammensetzung A so aufgetragen wird, dass die von ihr gebildete Schicht ein Auftragsgewicht von maximal 150 g/$m^2$ aufweist.

**3.** Das Verfahren nach Anspruch 1 oder 2, wobei die katalytische Vernetzung in Verfahrensschritt c) dazu führt, dass wenigstens 30 % der in der Polyisocyanatzusammensetzung A vorliegenden Isocyanatgruppen, zu Isocyanuratstruktureinheiten umgesetzt werden.

**4.** Das Verfahren nach einem der Ansprüche 1 bis 3, wobei die Polyisocyanatzusammensetzung A mindestens ≥ 50 Gew.-% aliphatische Polyisocyanate enthält.

**5.** Das Verfahren nach einem der Ansprüche 1 bis 4, wobei zwischen den Wiederholungen des wenigstens zweimal ausgeführten Verfahrensschrittes der jeweils andere Verfahrensschritt wenigstens einmal durchgeführt wird.

**6.** Das Verfahren nach Anspruch 5, wobei der Verfahrensschritt a) wenigstens zweimal ausgeführt wird und bei wenigstens zwei Wiederholungen Polyisocyanatzusammensetzungen A, welche unterschiedliche Polyisocyanate enthalten, aufgetragen werden.

**7.** Das Verfahren nach einem der Ansprüche 1 bis 6, wobei der Vernetzungskatalysator B1 sich basisch verhält.

**8.** Das Verfahren nach Anspruch 7, wobei die Zusammensetzung ein Carboxylat oder ein Alkoholat enthält.

**9.** Das Verfahren nach einem der Ansprüche 1 bis 8, wobei die Polyisocyanatzusammensetzung A blockierte Polyisocyanate enthält.

**10.** Das Verfahren nach einem der Ansprüche 1 bis 9, wobei die Polyisocyanatzusammensetzung A nur auf einen Teil der Fläche aufgetragen wird, der von der Zusammensetzung B bedeckt ist oder die Zusammensetzung b nur auf einen Teil der Fläche aufgetragen wird, die von der Polyisocyanatzusammensetzung A bedeckt ist.

**11.** Das Verfahren nach einem der Ansprüche 1 bis 10, wobei der Verfahrensschritt c) vollständig bei Raumtemperatur durchgeführt wird und mindestens 30 % der Isocyanatgruppen zu Isocyanuraten oder Uretdionen abreagieren.

**12.** Das Verfahren nach einem der Ansprüche 1 bis 10, wobei die Härtung in Verfahrensschritt c) zweistufig erfolgt, mit der Maßgabe, dass die Reaktionstemperatur in einem Verfahrensschritt c1) 60 °C bis 300 °C und in einem Verfahrensschritt c2) 10 °C bis 59 °C.

**13.** Das Verfahren nach einem der Ansprüche 1 bis 12, wobei das Verhältnis der Summe von freien und reversibel blockierten Isocyanatgruppen zur Summe der mit Isocyanatgruppen reaktiven Gruppen im Reaktionsgemisch, das zu Beginn des Verfahrensschritts c) auf der Oberfläche vorliegt, wenigstens 3 zu 1 beträgt.

## Claims

**1.** Process for coating surfaces containing the steps of

a) applying a polyisocyanate composition A to a surface;
b) applying a composition B containing at least one crosslinking catalyst B1 to the same surface; and
c) curing the polyisocyanate composition A by catalytic crosslinking of the polyisocyanate composition A, wherein the molar ratio of the sum of free and reversibly blocked isocyanate groups to the sum of the isocyanate-reactive groups at commencement of the process step is at least 3 : 1;

with the proviso that the process steps a) and b) are carried out in any desired sequence or else simultaneously but before the process step c) in such a way that a mixing of the polyisocyanate composition A and of the at least one catalyst B occurs only on the surface; and with the proviso that the process step a) or the process step b) is carried

out at least twice.

2. Process according to Claim 1, wherein the polyisocyanate composition A is applied such that the layer formed thereby has an application weight of not more than 150 g/$m^2$.

3. Process according to Claim 1 or 2, wherein the catalytic crosslinking in process step c) has the result that at least 30% of the isocyanate groups present in the polyisocyanate composition A are converted into isocyanurate structural units.

4. Process according to any of Claims 1 to 3, wherein the polyisocyanate composition A contains at least ≥ 50% by weight of aliphatic polyisocyanates.

5. Process according to any of Claims 1 to 4, wherein between the repetitions of the process step carried out at least twice the respective other process step is performed at least once.

6. Process according to Claim 5, wherein the process step a) is carried out at least twice and in at least two repetitions polyisocyanate compositions A containing different polyisocyanates are applied.

7. Process according to any of Claims 1 to 6, wherein the crosslinking catalyst B1 is basic.

8. Process according to Claim 7, wherein the composition contains a carboxylate or an alkoxide.

9. Process according to any of Claims 1 to 8, wherein the polyisocyanate composition A contains blocked polyisocyanates.

10. Process according to any of Claims 1 to 9, wherein the polyisocyanate composition A is applied only to a portion of the surface covered by the composition B or the composition b is applied only to a portion of the surface covered by the polyisocyanate composition A.

11. Process according to any of Claims 1 to 10, wherein the process step c) is performed entirely at room temperature and at least 30% of the isocyanate groups react to afford isocyanurates or uretdiones.

12. Process according to any of Claims 1 to 10, wherein the curing in process step c) is carried out in two stages with the proviso that the reaction temperature in a process step c1) is 60°C to 300°C and in a process step c2) is 10°C to 59°C.

13. Process according to any of Claims 1 to 12, wherein the ratio of the sum of free and reversibly blocked isocyanate groups to the sum of the isocyanate-reactive groups in the reaction mixture that is present on the surface at commencement of the process step c) is at least 3 to 1.

**Revendications**

1. Procédé pour le revêtement de surfaces, comportant les étapes

   a) application d'une composition de polyisocyanate A sur une surface ;
   b) application sur la même surface d'une composition B contenant au moins un catalyseur de réticulation B1 ; et
   c) durcissement de la composition de polyisocyanate A par réticulation catalytique de la composition de polyisocyanate A, le rapport molaire de la somme de groupes isocyanate libres et groupes isocyanate réversiblement bloqués à la somme des groupes réactifs avec les groupes isocyanates au début de l'étape du procédé valant au moins 3 : 1 ;
   étant entendu que les étapes a) et b) du procédé sont effectuées en ordre quelconque ou bien simultanément, mais avant l'étape c) du procédé, de sorte que d'abord un mélangeage de la composition de polyisocyanate A et dudit au moins un catalyseur B s'effectue sur la surface ;
   et étant entendu que l'étape a) du procédé ou l'étape b) du procédé est effectuée au moins deux fois.

2. Procédé selon la revendication 1, dans lequel la composition de polyisocyanate A est appliquée de manière que la couche constituée de celle-ci présente un poids d'application d'au maximum 150 g/$m^2$

3. Procédé selon la revendication 1 ou 2, dans lequel la réticulation catalytique dans l'étape c) du procédé conduit à ce qu'au moins 30 % des groupes isocyanate présents dans la composition de polyisocyanate A sont convertis en unités structurelles isocyanurate.

4. Procédé selon l'une quelconque des revendications 1 à 3, dans lequel la composition de polyisocyanate A contient au moins ≥ 50 % en poids de polyisocyanates aliphatiques.

5. Procédé selon l'une quelconque des revendications 1 à 4, dans lequel entre les répétitions de l'étape de procédé effectuée au moins deux fois l'autre étape respective de procédé est effectuée au moins une fois.

6. Procédé selon la revendication 5, dans lequel l'étape a) du procédé est effectuée au moins deux fois et lors d'au moins deux répétitions des compositions de polyisocyanate A qui contiennent différents polyisocyanates sont appliquées.

7. Procédé selon l'une quelconque des revendications 1 à 6, dans lequel le catalyseur de réticulation B1 à un comportement basique.

8. Procédé selon la revendication 7, dans lequel la composition contient un carboxylate ou un alcoolate.

9. Procédé selon l'une quelconque des revendications 1 à 8, dans lequel la composition de polyisocyanate A contient des polyisocyanates bloqués.

10. Procédé selon l'une quelconque des revendications 1 à 9, dans lequel la composition de polyisocyanate A n'est appliquée que sur une partie de la surface qui est couverte par la composition B ou la composition b n'est appliquée que sur une partie de la surface qui est couverte par la composition de polyisocyanate A.

11. Procédé selon l'une quelconque des revendications 1 à 10, dans lequel l'étape c) du procédé est effectuée entièrement à la température ambiante et au moins 30 % des groupes isocyanate réagissent complètement en isocyanurates ou urétdiones.

12. Procédé selon l'une quelconque des revendications 1 à 10, dans lequel le durcissement dans l'étape c) du procédé s'effectue en deux stades, étant entendu que la température de réaction est de 60 °C à 300 °C dans une étape c1) du procédé et de 10 °C à 59 °C dans une étape c2) du procédé.

13. Procédé selon l'une quelconque des revendications 1 à 12, dans lequel le rapport de la somme de groupes isocyanate libres et groupes isocyanate réversiblement bloqués à la somme des groupes réactifs avec les groupes isocyanate dans le mélange réactionnel qui est présent sur la surface au début de l'étape c) du procédé vaut au moins 3 : 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6133397 A
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- EP 0403921 B
- JP 07118263 A
- EP 1640394 A
- GB 2221465 A
- GB 2222161 A
- DE 3240613 A
- DE 3219608 A
- EP 0100129 A
- GB 1391066 A
- GB 1386399 A
- GB 809809 A
- EP 0056158 A
- EP 0056159 A
- EP 0033581 A
- EP 13196508
- DE 1667309 A
- EP 0013880 A
- EP 0047452 A
- EP 3765 A
- EP 10589 A
- DE 2631733 A
- EP 0671426 A
- EP 1599526 A
- US 4789705 A
- EP 1229016 A
- WO 2005087828 A
- EP 0379914 A
- EP 0443167 A
- EP 0896009 A
- EP 0962455 A
- EP 0668271 A
- WO 1999023128 A
- EP 0102482 A
- WO 2013167404 A


### In der Beschreibung aufgeführte Nicht-Patentliteratur


- *Justus Liebigs Annalen der Chemie,* 1949, vol. 562, 75-136
- *J. Prakt. Chem.,* 1994, vol. 336, 185-200
- Römpp Chemie Lexikon. Georg Thieme Verlag
- *European Polymer Journal,* 1979, vol. 16, 147-148
- **J. H. SAUNDERS ; K. C. FRISCH.** *Polyurethanes Chemistry and Technology,* 1962, 94